(19) Europäisches Patentamt
European Patent Office
Office européen des brevets

(11) **EP 2 546 658 A1**

(12) **DEMANDE DE BREVET EUROPEEN**

(43) Date de publication:
**16.01.2013 Bulletin 2013/03**

(21) Numéro de dépôt: **12176069.8**

(22) Date de dépôt: **12.07.2012**

(51) Int Cl.:
*G01P 5/14* (2006.01)      *G01P 13/02* (2006.01)
*F01D 17/06* (2006.01)     *F01D 17/08* (2006.01)
*F02C 9/00* (2006.01)      *F02K 3/00* (2006.01)
*G01M 9/08* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **13.07.2011 FR 1156434**

(71) Demandeurs:
• **Airbus Opérations SAS**
  **31060 Toulouse (FR)**

• **Airbus SAS**
  **31700 Blagnac (FR)**

(72) Inventeurs:
• **Feau, Julien**
  **31000 Toulouse (FR)**
• **Hugo, François**
  **31240 Saint Jean (FR)**

(74) Mandataire: **Gevers France**
  **81 boulevard Lazare Carnot**
  **31000 Toulouse (FR)**

(54) **Procédé de détermination de vitesse air d'un aéronef et aéronef équipé de moyens de mise en oeuvre**

(57) L'invention vise à fournir une information alternative de vitesse air d'un aéronef suffisamment précise et exploitable dans la partie du domaine de vol où des moyens basés sur la mesure de l'incidence ne sont pas adaptés. Pour ce faire, l'invention utilise des informations de pression délivrées par les moteurs de l'aéronef exploitables dans les systèmes au niveau avion de l'aéronef.

En particulier, l'aéronef est équipé de moteurs (1) composé au moins d'une nacelle (30) et d'un attelage de compresseur/turbine (2, 3 ; 12, 14, 16, 18), l'aéronef comportant au moins une unité de traitement de données (40) et au moins un système au niveau avion. Au moins un moteur (1) de l'aéronef est muni d'au moins une sonde de pression statique de l'air ambiant (P1), sous la nacelle (30), de sondes de pression statique d'air (P2, P3) agencés au niveau moteur, d'une de sonde de pression (P4) en sortie de compresseur (12) d'au moins un capteur de vitesse de rotation (N1, N2), par exemple de soufflante (10), et de sondes de température de l'air ambiant (T1) en entrée d'air (E1) ou en un point de compression (T2). L'unité de traitement (40) est alors apte, à partir de mesures effectuées par ces détecteurs au niveau moteur à délivrer des données de détermination de la vitesse air à au moins l'un des systèmes au niveau avion.

*Fig. 1*

EP 2 546 658 A1

**Description**

**DOMAINE TECHNIQUE**

L'invention se rapporte à un procédé de détermination de la vitesse d'un aéronef dans l'air, appelée « vitesse air », à partir de paramètres de pression, en particulier de pression statique et de pression totale. L'invention concerne également un aéronef équipé de turbomachines, en particulier de turboréacteurs ou de turbopropulseurs, dont l'une au moins est munie de moyens aptes à mettre en oeuvre ce procédé. Ces turbomachines sont également ci-après dénommées « moteurs ».

Le domaine de l'invention est celui de la détermination de la vitesse air d'un aéronef. Cette détermination est réalisée à partir de la connaissance des paramètres de pression : pression statique, qui correspond à la pression atmosphérique, et pression totale, somme de la pression statique et de la pression dynamique. La pression dynamique est créée par la vitesse de l'aéronef en vol, c'est-à-dire la vitesse air, par rapport à la masse d'air ambiante. L'invention s'applique plus particulièrement, mais pas exclusivement, aux avions équipés de turboréacteur ou de turbopropulseurs, comme cela est plus détaillé ci-après, mais pourrait également s'appliquer à tout engin volant ou aéronef.

**ÉTAT DE LA TECHNIQUE**

Les paramètres de pression sont classiquement mesurés par des sondes positionnées en partie avant de l'aéronef. Ces mesures sont réalisées par des prises de pression statique, associées à des transducteurs, et par des sondes Pitot qui mesurent la pression totale à l'aide d'un manomètre intégré.

Pour des raisons de disponibilité de l'information de vitesse et du fait de l'importance fondamentale de cette connaissance dans le contrôle du vol, il existe trois chaînes primaires de mesure de chaque paramètre de pression et, dans certaines architectures, une quatrième chaîne dite de secours.

Il est maintenant recherché d'avoir accès à une information alternative de vitesse, indépendante des informations provenant des centrales anémométriques classiques et sensibles de manière différente à une perturbation donnée.

Disposer d'une information alternative de vitesse air pour le pilote et pour les clients de cette information permet en effet de pouvoir pallier à toute panne simple ou multiple pouvant affecter les données anémométriques de base.

Une solution consiste à estimer la vitesse de l'aéronef à partir de l'équation de sustentation à partir de son angle d'incidence et d'autres paramètres. Cependant, à grande vitesse, la variation de l'incidence affecte sensiblement la variation de la vitesse estimée correspondante par un fort taux d'échange. Il en résulte une imprécision trop importante pour le but recherché : cette solution n'est exploitable que dans un domaine de basses vitesses et non dans tout le domaine de vol d'un aéronef.

**EXPOSÉ DE L'INVENTION**

L'invention vise à pouvoir disposer d'une information alternative de vitesse air d'un aéronef en vol suffisamment précise et exploitable, notamment en temps réel, et en particulier dans le domaine de vitesses où la solution précédente n'est pas applicable. Pour ce faire, l'invention utilise des informations de pression délivrées par les moteurs de l'aéronef afin de reconstituer une information de vitesse air exploitable dans les systèmes de contrôle de vol de l'aéronef.

Plus précisément, la présente invention a pour objet un procédé de détermination d'une vitesse air exploitée « au niveau avion », notamment dans les systèmes d'affichages - en particulier dans le cockpit -, de surveillance, d'alarmes - par exemple du système anémométrique -, de navigation et de commandes de vol d'un aéronef. Cet aéronef comporte des moteurs composés chacun au moins d'une nacelle, et d'un attelage de compression d'air et de détente de gaz. Dans ce procédé, la vitesse air est une vitesse air dite moteur déterminée à partir de paramètres moteur spécifiques résultant de mesures effectuées uniquement au niveau d'au moins un moteur, à savoir à partir d'une pression statique de l'air ambiant, dite pression statique nacelle, mesurée sous la nacelle de ce moteur, et d'une pression totale, dite pression totale moteur, déterminée à partir de valeurs de paramètres moteur par des moyens de modélisation d'un champ aérodynamique et/ou d'un cycle thermodynamique d'au moins un composant du moteur. L'expression « sous la nacelle » signifie entre le capot externe et le capot interne de cette nacelle.

La détermination de la vitesse air moteur est effectuée soit au niveau avion soit dans un traitement intermédiaire au niveau moteur puis transmise au niveau avion pour définir la vitesse air sous une forme adaptée aux besoins.

Ainsi des informations de vitesse air moteur sont élaborées à partir de mesures de pression effectuées au niveau moteur, indépendamment des valeurs de paramètres fournies par des centrales anémométriques.

En particulier, la détermination de la pression totale moteur peut faire intervenir, outre des mesures de pression statique nacelle, des mesures de paramètres choisis parmi la pression statique de l'air au niveau moteur, dite pression statique moteur, au moins une pression de sortie de compression, la vitesse de rotation d'au moins un attelage de compression/détente et la température de l'air ambiant.

De préférence, lorsque le moteur est équipé d'une soufflante, la pression statique moteur est mesurée en amont et/ou en aval de la soufflante ou, en absence de soufflante, dans le conduit d'entrée d'air du moteur.

Avantageusement, des données de vitesse conventionnelle et de nombre de Mach sont élaborées par un traitement des données de pression statique nacelle et de pression totale moteur transmises au niveau avion. De plus, ces données peuvent constituer autant de sources alternatives d'information de vitesse que de nombre de moteurs équipant l'aéronef.

De préférence, au moins un système au niveau avion de l'aéronef reçoit les paramètres de détermination de vitesse air moteur et des données de vitesses anémométriques pour constituer différentes sources pouvant être exploitées par le système en fonction de ses besoins.

L'invention se rapporte également à un aéronef dans lequel le procédé de fourniture d'une vitesse air au niveau avion défini ci-dessus peut être mis en oeuvre. Un tel aéronef est équipé de moteurs, chaque moteur étant composé au moins d'une nacelle et d'au moins un attelage compresseur/turbine, par exemple un attelage haute pression (ci-après HP) et un attelage basse pression (ci-après BP), d'au moins une unité de traitement de données moteurs, ainsi que d'au moins un système avion d'affichages, en particulier dans le cockpit, de surveillance, de navigation, d'alarmes et de commandes de vol au niveau avion en liaison avec cette unité. Dans cet aéronef, au moins un moteur est muni d'au moins une sonde de pression statique de l'air ambiant agencée sous la nacelle, d'au moins une sonde de pression statique moteur, d'au moins un capteur de vitesse de rotation du moteur, d'au moins une sonde de pression de sortie d'un étage compresseur et d'au moins une sonde de température de l'air ambiant. Ces sondes et capteurs (ci-après détecteurs) sont reliés à l'unité de traitement qui est apte à transmettre, à partir des mesures fournies par au moins une partie des détecteurs à l'entrée de moyens de modélisation d'un champ aérodynamique et/ou d'un cycle thermodynamique d'au moins un composant d'au moins un moteur, des données moteur de détermination de la vitesse air à au moins l'un des systèmes au niveau avion.

En particulier, ce ou ces système(s) au niveau avion est (sont) équipé(s) de moyens aptes à traiter les données de pressions statique nacelle et totale moteur pour déterminer des données de vitesse air, sous forme de vitesse conventionnelle et de nombre de Mach. Alternativement ou cumulativement, l'unité de traitement est également équipée de ces moyens de traitement de ces données de pressions.

Le champ aérodynamique ou le cycle thermodynamique est celui d'un composant du moteur choisi parmi une soufflante, une entrée d'air, un étage compresseur et un étage turbine.

De préférence, la sonde de température de l'air ambiant peut être agencée dans l'entrée d'air du moteur.

Notamment, le champ aérodynamique de la soufflante peut être modélisé à partir des données du capteur de vitesse de rotation de la soufflante, des sondes de pression statiques « moteur » disposées en amont et/ou en aval de la soufflante, et de la température de l'air.

Les détecteurs sont associés à des systèmes transducteurs aptes à convertir les mesures en signaux représentatifs de paramètres de pression statique, de vitesse de rotation, et de température, et à transmettre ces signaux à l'unité de traitement de données. Cette unité de traitement est alors apte à transmettre, à partir de ces signaux, des données de pression statique nacelle et de pression totale moteur à au moins l'un des systèmes au niveau avion pour déterminer des données de vitesse air sous une forme adaptée aux besoins, en particulier sous forme de vitesse conventionnelle et de nombre de Mach.

Selon un mode de réalisation préféré, l'aéronef comportant également des centrales de mesures anémométriques, les systèmes au niveau avion qui reçoivent des données de pression statique nacelle et de pression moteur totale reçoit également des données anémométriques par une liaison avec lesdites centrales anémométriques, et est apte à exploiter les données de vitesse air et anémométriques en fonction des besoins.

**PRÉSENTATION DES FIGURES**

D'autres données, caractéristiques et avantages de la présente invention apparaîtront à la lecture de la description non limitée qui suit, en référence aux figures annexées qui représentent, respectivement :

- la figure 1, un schéma en coupe d'un moteur d'aéronef équipé de détecteurs de mesure intervenant dans la fourniture d'une vitesse air de l'aéronef selon l'invention, et
- la figure 2, un diagramme fonctionnel d'élaboration et d'utilisation des vitesses air de l'aéronef selon le procédé de l'invention.

**DESCRIPTION DÉTAILLÉE**

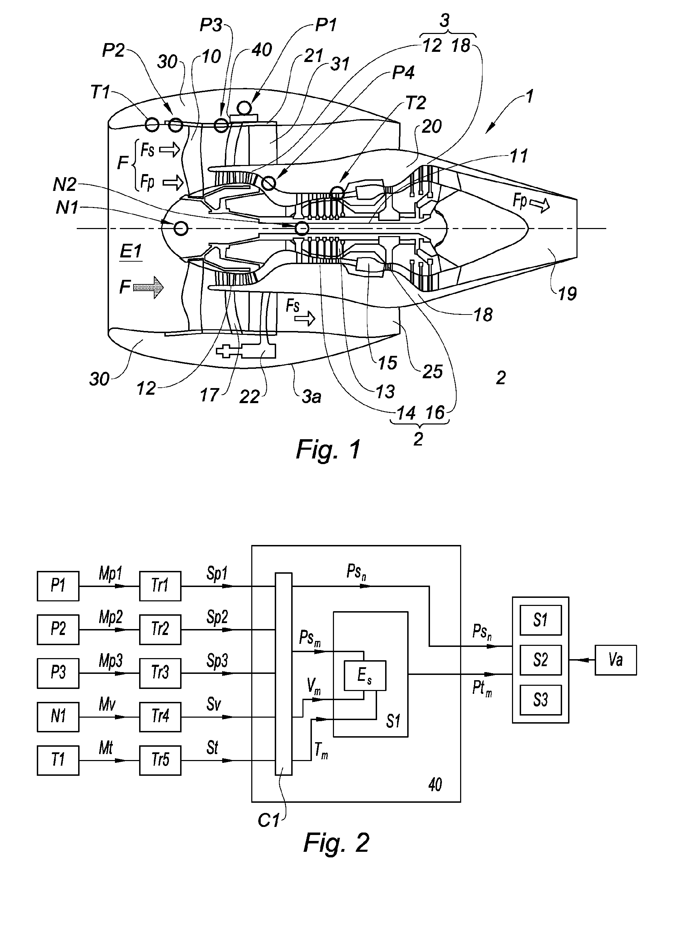

En référence à la vue en coupe de la figure 1, un turboréacteur 1 d'un aéronef comporte d'amont en aval par rapport à l'écoulement de flux d'air symbolisé par la flèche F à partir de l'entrée d'air E1 : une soufflante 10, des compresseurs BP 12 et HP 14, une chambre de combustion 15, des turbines de détente HP 16 et BP 18, et une tuyère d'échappement 19. Les étages de compression et de détente HP et BP forment respectivement, en liaison avec des arbres d'entraînement 13 et 11, des attelages HP 2 et BP 3. Un carénage 20 vient protéger l'ensemble des attelages HP et BP jusqu'à la tuyère d'échappement primaire 19 et un carter de soufflante 21 est supporté par des bras 31. La nacelle 30 est montée sur le carter 21 et sur le mât d'attache-moteur (non représenté sur la figure).

Le flux d'air entrant F est accéléré à travers la soufflante 10 puis redressé via des redresseurs 17 pour former un flux secondaire Fs. Ce flux Fs s'écoule entre le carénage 20 et la nacelle 30 avant d'être éjecté par la tuyère secondaire 25.

Le flux central du flux entrant forme un flux primaire Fp qui est comprimé, brûlé et détendu dans les attelages HP 2 et BP 3. Ce flux primaire Fp réalise alors, avec le flux secondaire redressé Fs, la propulsion de l'aéronef. Le flux primaire Fp détendu permet également de satisfaire aux autres besoins énergétiques de l'aéronef (énergies pneumatique, électrique et hydraulique) via un boîtier d'accessoires 22. Les gaz résiduels du flux primaire Fp s'échappent par la tuyère primaire 19.

En outre, le turboréacteur 1 est équipé classiquement d'un grand nombre de détecteurs : sondes de pressions, capteurs de vitesses et capteurs de températures des composants des attelages HP 2 et BP 3 (compresseurs BP 12 et HP 14, turbines BP 16 et HP 18) et de la soufflante 10. L'état des moteurs est contrôlé et régulé par transmission de données fournies par ces détecteurs, dites « paramètres moteur », à une unité de traitement 40 de type FADEC (initiales de « Full Authority Digital Engine Control). Cette unité permet en particulier de piloter le débit de la pompe de carburant afin de réguler la combustion en fonction des paramètres moteur. L'unité 40 est installée sur le carter 21 de la soufflante.

Selon l'invention, des paramètres de pression « nacelle » et « moteur » sont sélectionnés pour déterminer, respectivement à partir de la pression statique de l'air ambiant et de la pression totale, une vitesse air de l'aéronef et pour fournir cette information de vitesse à des systèmes « au niveau avion ». La pression totale fait intervenir - outre la pression statique de l'air ambiant d'autres mesures de pressions statiques et des modélisations du fonctionnement interne du moteur.

Dans un exemple, comme illustré en particulier par le schéma de la figure 1, sont sélectionnés : la sonde P1 de mesure de pression statique de l'air ambiant, positionnée sous la nacelle 30, c'est-à-dire entre le capot externe 3a et le capot interne 3b de cette nacelle ; les sondes de pression statique « moteur » P2 et P3, en amont et en aval de la soufflante 10 ; la sonde de pression de sortie de compresseur P4 ; ainsi que le capteur N1 de vitesse de rotation de la soufflante 10 et, à l'entrée d'air E1 du turboréacteur 1, la sonde T1 de température d'air. Les données des sondes P1 à P3 et T1 ainsi que celles du capteur N1 sont transmises à l'unité de traitement.

Comme illustré par le diagramme de la figure 2, les mesures de pressions statiques de l'air ambiant Mp1 et « moteur » Mp2, Mp3, de vitesse de la soufflante Mv et de température de l'air Mt, fournies respectivement par les détecteurs P1 à P3, N1 et T1, sont transformées en signaux électriques Sp1 à Sp3, Sv et St par des transducteurs Tr1 à Tr5 appropriés, connus de la personne de l'art. Ces signaux sont ensuite convertis en données numériques dans un convertisseur analogique/numérique C1 de l'unité de traitement numérique 40. Les signaux de pression statique de l'air ambiant, Sp1, sont converties en données numériques de pression statique « nacelle » $Ps_n$.

Par ailleurs, les signaux de pression statique moteur, Sp2 et Sp3, sont convertis en une pression statique « moteur » $Ps_m$, utilisée dans un simulateur S1. La pression $Ps_m$ résulte de la combinaison des deux signaux Sp2 et Sp3 numérisés par le convertisseur C1. Alternativement, le convertisseur peut transmettre les deux signaux Sp2 et Sp3 au simulateur S1 après numérisation. Enfin, les signaux de vitesse Sv et de température St sont convertis en données numériques Vm et Tm via le convertisseur.

La pression statique « nacelle » $Ps_n$ est constituée des données numériques correspondant aux mesures Mp1, alors que la pression totale $Pt_m$ se déduit de l'entrée des données $Ps_n$, $Ps_m$, Vm et Tm, correspondant aux mesures Mp1, Mp2 et/ou Mp3, N1 et T1, dans le simulateur S1. Ce simulateur utilise les parties de modélisation du cycle thermodynamique ou du champ aérodynamique du composant moteur sélectionné, formant ainsi un extrait Es du cycle thermodynamique complet du moteur (ci-après modélisation moteur).

Dans cet exemple non limitatif, le champ aérodynamique de la soufflante 10 est modélisé et les paramètres $Ps_m$, Vm et Tm sont utilisées dans un extrait Es de la modélisation moteur, cet extrait formant une modélisation du champ aérodynamique de la soufflante 10. La modélisation moteur et les moyens d'extraction de cette modélisation pour former des modélisations spécifiques de composants moteur sont connus de la personne du métier.

L'unité 40 transmet alors les données $Ps_n$ et $Pt_m$ aux systèmes au niveau « avion » S1 à S3 qui déterminent alors la vitesse air de l'aéronef sous des formes adaptées à l'utilisation de cette information de vitesse. Ces systèmes S1 à S3 sont dédiés, dans l'exemple illustré, respectivement aux affichages du cockpit, aux alarmes de la centrale anémométrique Sa et aux commandes de vol. Dans d'autres variantes, les données sont fournies à un sous-ensemble de ces systèmes et/ou au système ou centrale anémométrique Sa.

Par exemple, il est possible de déterminer des données de vitesse air conventionnelle Vc et de nombre de Mach $M_n$ par les formules connues :

$$V_c = \sqrt{5 \times \left[\left(\frac{Pt_m - Ps_n}{P_0} + 1\right)^{2/7} - 1\right]}$$

avec $P_0$ = pression statique de référence (pression atmosphérique de 1013, 25 mbar), et

$$M_n = \sqrt{5 \times \left[\left(\frac{Pt_m}{Ps_n}\right)^{2/7} - 1\right]}$$

Afin d'éviter une fluctuation trop importante du flux de données ainsi déterminées, il est avantageux de filtrer les paramètres $Ps_n$ et $Pt_m$ selon une bande passante appropriée. De même les valeurs de Vc et Mn sont avantageusement filtrées en fonction des besoins de l'utilisateur.

Ainsi, chaque turboréacteur est apte à fournir des données de pressions $Ps_n$ et $Pt_m$ et donc potentiellement des données de vitesses Vc et Mn. Par ailleurs, des données de vitesses anémométriques Va du système anémométrique peuvent également être délivrées par exemple aux systèmes de surveillance avion pour constituer différentes sources. Les données de vitesses relatives à chaque turboréacteur constituent alors autant de sources alternatives d'information de vitesse que de nombre de turboréacteurs équipant l'aéronef pour les systèmes avion.

Ces sources et les données de vitesse Va des centrales anémométriques Sa peuvent être combinées selon l'invention par chaque système avion en fonction des besoins.

Bien entendu, l'invention n'est pas limitée aux exemples de réalisation décrits et représentés. En particulier, d'autres extraits de modélisation peuvent être utilisés. Par exemple, en référence à la figure 2, le champ aérodynamique d'un compresseur 12 ou 14 peut être modélisé en entrant des données de mesures d'un capteur de vitesse N2 de ce compresseur, des sondes de pressions statiques de l'air P2 et P3 agencées en amont et en aval de ce compresseur, de sonde de pression P4 en sortie du compresseur, et de capteur de température de l'air T2 en un point du compresseur. Par ailleurs, la détermination des vitesses air moteur peut être effectuée par l'unité de traitement puis transmise au niveau avion ou directement au niveau avion par les systèmes avion.

## Revendications

1. Procédé de détermination d'une vitesse air exploitée au niveau avion d'un aéronef comportant des moteurs (1) composés chacun au moins d'une nacelle (30) et d'un attelage (2, 3) de compression d'air et de détente de gaz, ce procédé est **caractérisé en ce que** la vitesse air est une vitesse air dite moteur (Vc, Mn) déterminée à partir de paramètres moteur spécifiques résultant de mesures effectuées uniquement au niveau d'au moins un moteur (1), à savoir à partir:

   - d'une pression statique de l'air ambiant, dite pression statique nacelle ($Ps_n$), mesurée (Mp1) sous la nacelle (30) de ce moteur (1), et
   - d'une pression totale, dite pression totale moteur ($Pt_m$) déterminée à partir de valeurs de paramètres moteur par des moyens de modélisation d'un champ aérodynamique et/ou d'un cycle thermodynamique d'au moins un composant du moteur.

2. Procédé de détermination d'une vitesse air selon la revendication 1, dans lequel la détermination de la vitesse air moteur (Vc, Mn) est effectuée soit au niveau avion soit dans un traitement intermédiaire au niveau moteur pour définir la vitesse air sous une forme adaptée aux besoins.

3. Procédé de détermination d'une vitesse air selon l'une des revendications 1 ou 2, dans lequel la détermination de la pression totale moteur ($Pt_m$) fait intervenir des mesures de pression statique nacelle (Mp1) ainsi que des mesures de paramètres choisis parmi la pression statique de l'air (Mp2, Mp3) au niveau moteur (1), dite pression statique moteur, au moins une pression de sortie de compression, la vitesse de rotation d'au moins un attelage de compression/détente et la température de l'air ambiant (Mt).

4. Procédé de détermination d'une vitesse air selon la revendication 1, dans lequel la pression statique moteur est mesurée en amont (Mp2) et/ou en aval (Mp3) d'une soufflante (10) équipant le moteur.

5. Procédé de détermination d'une vitesse air selon l'une des revendications 1 ou 2, dans lequel des données de vitesse conventionnelle (Vc) et de nombre de Mach (Mn) sont élaborées par un traitement des données de pression statique nacelle ($Ps_n$) et de pression totale moteur ($Pt_m$) transmises au niveau avion (S1 à S3), ces données constituant autant de sources alternatives d'information de vitesse que de nombre de moteurs équipant l'aéronef.

6. Procédé de détermination d'une vitesse air selon la revendication précédente, dans lequel au moins un système (S1 à S3) au niveau avion de l'aéronef reçoit les paramètres de détermination (Psn, Ptm) de vitesse air moteur (Vc, Mn) et des données de vitesses anémométriques pour constituer différentes sources pouvant être exploitées par le système (S1 à S3) en fonction de ses besoins.

7. Aéronef équipé de moteurs, chaque moteur (1) étant composé au moins d'une nacelle (30), d'un attelage compresseur/turbine(2,3), d'au moins une unité de traitement de données (40) ainsi que d'au moins un système avion d'affichages, de surveillance, de navigation, d'alarmes et de commandes de vol (S1 à S3) au niveau avion en liaison avec cette unité (40), **caractérisé en ce qu'**au moins un moteur (1) est muni d'au moins une sonde de pression statique de l'air ambiant (P1) agencée sous la nacelle (30), d'au moins une sonde de pression statique moteur (P2 , P3) agencée au niveau du moteur, d'au moins une sonde de sortie (P4) d'une étage compresseur (12), d'au moins un capteur de vitesse de rotation (N1, N2) du moteur et d'au moins une sonde de température de l'air ambiant (T1), **en ce que** ces détecteurs (P1 à P4, N1, T1) sont reliés à l'unité de traitement (40) qui est apte à transmettre, à partir des mesures fournies par au moins une partie des détecteurs à l'entrée de moyens de modélisation d'un champ aérodynamique et/ou d'un cycle thermodynamique d'au moins un composant d'au moins un moteur, des données moteur ($Ps_n$, $Pt_m$, Vc, Mn) de détermination de la vitesse air à au moins l'un des systèmes au niveau avion (S1 à S3) de l'aéronef.

8. Aéronef selon la revendication précédente, dans lequel ledit au moins un système (S1 à S3) au niveau avion est équipé de moyens aptes à traiter les données de pression statique nacelle ($Ps_n$) et totale moteur ($Pt_m$) pour déterminer des données de vitesse air, sous forme de vitesse conventionnelle (Vc) et de nombre de Mach (Mn).

9. Aéronef selon l'une des revendications 7 ou 8, dans lequel le champ aérodynamique ou le cycle thermodynamique est celui d'un composant du moteur choisi parmi une soufflante (10), une entrée d'air (E1), un étage compresseur (12, 14,) et un étage turbine (16, 18).

10. Aéronef selon l'une quelconque des revendications 7 à 9, dans lequel la sonde de température de l'air ambiant (T1) est agencée en entrée d'air (E1) du moteur (1).

11. Aéronef selon l'une quelconque des revendications 7 à 10, dans lequel le champ aérodynamique de la soufflante (10) est modélisé à partir des données du capteur de vitesse de rotation (N1) de la soufflante, des sondes de pression statiques « moteur », disposés en amont (P2) et/ou en aval (P3) de la soufflante, et du capteur de la température de l'air (T1).

12. Aéronef selon l'une quelconque des revendications 6 à 10, dans lequel les détecteurs sont associés à des systèmes transducteurs (Tr1 à Tr5), aptes à convertir les mesures (Mp1 à Mp3, Mv, Mt) de paramètres fournies par des détecteurs (P1 à P4, N1, N2, T1, T2) en signaux (Sp1 à Sp3, Sv, St) représentatifs de paramètres de pression statique (Sp1 à Sp3), de vitesse de rotation (Sv) et de température (St) et à transmettre ces signaux à l'unité de traitement de données (40) qui est alors apte à transmettre, à partir de ces signaux, des données de pression statique nacelle ($Ps_n$) et de pression totale moteur ($Pt_m$) à au moins l'un des systèmes au niveau avion (S1 à S3) de l'aéronef pour déterminer des données de vitesse air (Vc, Mn).

13. Aéronef selon la revendication précédente, dans lequel la ou les sondes de pression statique moteur (P2, P3) agencé(s) au niveau moteur est (sont) disposées en amont et/ou en aval d'une soufflante (10).

14. Aéronef selon la revendication précédente, **caractérisé en ce que**, l'aéronef comportant également des centrales de mesures anémométriques (Sa), les systèmes au niveau avion (S1, S2, S3), qui reçoivent les données de pression statique nacelle ($Ps_n$) et totale moteur ($Pt_m$), reçoivent également des données anémométriques par une liaison avec lesdites centrales anémométriques, et sont apte à combiner les données de vitesse air moteur et anémométriques en fonction des besoins.

Fig. 1

Fig. 2

Europäisches
Patentamt

European
Patent Office

Office européen
des brevets

**RAPPORT DE RECHERCHE EUROPEENNE**

Numéro de la demande

EP 12 17 6069

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 244 344 A1 (UNITED TECHNOLOGIES CORP [US]) 4 novembre 1987 (1987-11-04) * colonne 1, ligne 20-27 * * colonne 2, ligne 56 - colonne 3, ligne 4 * * colonne 3, ligne 54 - colonne 4, ligne 40 * * colonne 5, ligne 43-57; figure * ----- | 1-14 | INV. G01P5/14 G01P13/02 F01D17/06 F01D17/08 F02C9/00 F02K3/00 G01M9/08 |
| X | EP 0 393 730 A1 (BOEING CO [US]) 24 octobre 1990 (1990-10-24) * colonne 1, ligne 19-34 * * colonne 2, ligne 19 - colonne 3, ligne 16 * * colonne 4, ligne 1-30 * * colonne 5, ligne 10-38; figures 1,2,4-6 * ----- | 1-14 | |
| X | FR 2 916 290 A1 (AIRBUS FRANCE SAS [FR]) 21 novembre 2008 (2008-11-21) * page 1, ligne 15 - page 2, ligne 10 * * page 2, ligne 22-30; figures 1,2 * ----- | 1-14 | **DOMAINES TECHNIQUES RECHERCHES (IPC)** G01P F01D F02C F02K G01M |
| X | FR 2 941 551 A1 (AIRBUS FRANCE [FR]) 30 juillet 2010 (2010-07-30) * page 5, ligne 12 - page 6, ligne 13 * * page 8, ligne 11 - page 9, ligne 22 * * page 11, ligne 15-25; figures 1,2,3,4 * ----- | 1-14 | |

Le présent rapport a été établi pour toutes les revendications

| Lieu de la recherche | Date d'achèvement de la recherche | Examinateur |
|---|---|---|
| La Haye | 19 octobre 2012 | Pflugfelder, Günther |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
................................................................................
& : membre de la même famille, document correspondant

EPO FORM 1503 03.82 (P04C02)

**EP 2 546 658 A1**

**ANNEXE AU RAPPORT DE RECHERCHE EUROPEENNE
RELATIF A LA DEMANDE DE BREVET EUROPEEN NO.**  EP 12 17 6069

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-10-2012

| Document brevet cité au rapport de recherche | | Date de publication | Membre(s) de la famille de brevet(s) | | Date de publication |
|---|---|---|---|---|---|
| EP 0244344 | A1 | 04-11-1987 | CA | 1258126 A1 | 01-08-1989 |
| | | | DE | 3761497 D1 | 01-03-1990 |
| | | | EP | 0244344 A1 | 04-11-1987 |
| | | | JP | 62261617 A | 13-11-1987 |
| | | | US | 4785403 A | 15-11-1988 |
| EP 0393730 | A1 | 24-10-1990 | DE | 4012367 A1 | 25-10-1990 |
| | | | EP | 0393730 A1 | 24-10-1990 |
| | | | JP | 3065496 A | 20-03-1991 |
| | | | US | 5001638 A | 19-03-1991 |
| FR 2916290 | A1 | 21-11-2008 | FR | 2916290 A1 | 21-11-2008 |
| | | | US | 2008288130 A1 | 20-11-2008 |
| FR 2941551 | A1 | 30-07-2010 | CA | 2748390 A1 | 05-08-2010 |
| | | | CN | 102301296 A | 28-12-2011 |
| | | | EP | 2382515 A1 | 02-11-2011 |
| | | | FR | 2941551 A1 | 30-07-2010 |
| | | | US | 2011282560 A1 | 17-11-2011 |
| | | | WO | 2010086526 A1 | 05-08-2010 |

EPO FORM P0460

Pour tout renseignement concernant cette annexe : voir Journal Officiel de l'Office européen des brevets, No.12/82